# EUROPÄISCHE PATENTANMELDUNG

(11) **EP 3 739 835 A1**
(43) Veröffentlichungstag der Anmeldung: **18.11.2020**
(21) Anmeldenummer: 19174360.8
(22) Anmeldetag: 14.05.2019
(51) Int. Cl.: H04L 29/06

(54) **MECHANISMUS ZUR PRÜFUNG EINER FOLGE VON PROZESSABBILDERN**

(71) Anmelder: Siemens Aktiengesellschaft, 80333 München (DE)
(72) Erfinder: Blöcher, Uwe, 82178 Puchheim (DE); Falk, Rainer, 85586 Poing (DE); Feist, Christian Peter, 80689 München (DE); Pfau, Axel, 80333 München (DE); Sperl, Franz, 92526 Oberviechtach (DE); Trummer, Georg, 92224 Amberg (DE)

(57) **Zusammenfassung**

Die Erfindung betrifft ein Verfahren zur Überwachung der Integrität eines cyber-physischen Systems (1), welches eine Automatisierungskomponente (2) umfasst oder dadurch gebildet wird, bei dem
a) einem Integritätsüberwachungs-Modul (20) eine Folge (PI_{i,i+1,i+2,...}) zeitlich aufeinanderfolgender vollständiger und/oder partieller Prozessabbilder (PI) der Eingänge und/oder der Ausgänge der wenigstens einen Automatisierungskomponente (2) breitgestellt wird,
b) das Integritätsüberwachungs-Modul (20) eine erwartete Folge (PI'_{i,i+1,i+2,...}) erwarteter zeitlich aufeinanderfolgender vollständiger und/oder partieller Prozessabbilder (PI') der Eingänge und/oder der Ausgänge der wenigstens einen Automatisierungskomponente (2) berechnet,
c) die in Schritt a) bereitgestellte Folge (PI_{i,i+1,i+2,...}) oder wenigstens ein Teil dieser und die in Schritt b) berechnete erwartete Folge (PI'_{i,i+1,i+2,...}) oder wenigstens ein Teil dieser miteinander verglichen und/oder analysiert werden, und
d) basierend auf dem Vergleich und/oder der Analyse die Integrität des zu überwachenden cyber-physischen Systems (1), insbesondere zumindest der wenigstens einen Automatisierungskomponente (2) beurteilt wird.

Darüber hinaus betrifft die Erfindung ein Integritätsüberwachungs-System (19), eine Automatisierungskomponente (2), ein Computerprogramm und ein computerlesbares Medium.

## Beschreibung

Die Erfindung betrifft ein Verfahren zur Überwachung der Integrität eines insbesondere industriellen cyber-physischen Systems. Darüber hinaus betrifft die Erfindung ein Integritätsüberwachungs-System, eine Automatisierungskomponente, ein Computerprogramm und ein computerlesbares Medium.

Mit zunehmender Automatisierung erfolgt eine zunehmende Verbreitung von industriellen Steuerungs- und Automatisierungssystemen. Solche Systeme, die teilweise auch als cyber-physisches System (CPS) oder Industrial Internet of Things (IIoT) bezeichnet werden, kommen zum Beispiel bei der Fertigung von Maschinen oder Werkstücken zum Einsatz. Steuerungs- bzw. Automatisierungssysteme können prozesstechnische Anlagen implementieren. Industrielle Steuerungs- bzw. Automatisierungssysteme werden auch im Bereich Verkehrsüberwachung oder Verkehrssteuerung eingesetzt, beispielsweise im Zusammenhang mit Verkehrsleitsystemen in Städten, in der Gebäudeautomatisierung, beim Bahnverkehr oder im Flugverkehr. Sie können auch bei der Energieerzeugung, zum Beispiel in Kraftwerken oder Umspannwerken, in der Prozesstechnik sowie bei der Energieübertragung und Energieverteilung (Smart Grid) Verwendung finden.

Die Integrität von Systemen (englisch: Device Integrity, System Integrity), insbesondere von industriellen Steuerungs- bzw. Automatisierungssystemen und von deren Steuerungs- und Automatisierungsgeräten ist ein wichtiges Schutzziel. Durch den Schutz der Integrität wird erreicht, dass ein System tatsächlich die erwartete Funktionalität realisiert.

Dazu werden Angriffe auf eine Maschine bzw. ein Automatisierungssystem, die diese manipulieren könnten (z.B. Firmware, Konfigurationsdaten, physikalische Manipulation), verhindert (Prevent).

Neben der Angriffs- bzw. Manipulationsvermeidung ist es auch sehr wichtig, eine eventuell trotz vorhandener Sicherheitsmaßnahmen erfolgte Manipulation erkennen zu können. Dazu dient eine Integritätsüberwachung einer Maschine beziehungsweise eines Automatisierungssystems zur Laufzeit. Hierfür werden Integritätsüberwachungsdaten im laufenden Betrieb erfasst und anhand von Integritäts-Referenzdaten überprüft.

Aus dem allgemeinen IT-Bereich sind sogenannte Intrusion Detection Systeme (IDS) bekannt, mittels derer Angriffe auf IT-Systeme erkannt werden können. Es kann sich sowohl um Hostbasierte als auch Netzwerk-basierte Intrusion Detection Systeme handeln. Dabei werden Informationen eines IT-Systems überwacht. Die Ausprägung solcher Systeme ist nach dem Kenntnisstand der Anmelderin meist Regel-basiert. Aus dem Artikel "Application of Neural Networks to Intrusion Detection" von Jean-Philippe Planquart, SANS Institute 2001, https://www.sans.org/readingroom/whitepapers/detection/applicationneural-networksintrusion-detection-336 sind auch Ansätze unter Verwendung von Methoden des maschinellen Lernens bekannt.

Es ist bekannt, Prozessdaten über ein Steuerungsnetzwerk zu übertragen, z.B. über ein OPC UA Protokoll, REST, HTTP, XMPP, AMQT, MQTT. Es ist auch bekannt, die Datenübertragung durch ein kryptographisches Sicherheitsprotokoll wie TLS oder IPsec zu schützen.

Es sind Control-Flow Integrity (CFI) Mechanismen bekannt (siehe beispielsweise http://www.cs.ucr.edu/∼heng/teaching/cs260-winter2017/cfi.pdf). Diese können z.B. auf Quellcode, bzw. Binärdateien angewendet werden, um das resultierende Programm vor der Ausnutzung von möglicherweise vorhandenen Schwachstellen zu schützen. Dabei kann beispielsweise mittels statischer Analyse ein Kontrollflussgraph (engl. Control Flow Graph - CFG) abgeleitet werden. Die zu schützende Software wird an entsprechenden Stellen z.B. mit Check-Routinen und Labels instrumentiert, sodass zur Laufzeit überprüft werden kann, ob der Kontrollfluss des Programmes von dem statisch ermittelten CFG abweicht.

Ein Ansatz für ein integriertes System Integrity Monitoring ist in dem Aufsatz "Enhanced Integrity Protection for Industrial Cyber Physical Systems" von Rainer Falk und Steffen Fries, The Second International Conference on Cyber-Technologies and Cyber-Systems CYBER 2017, November 12 - 16, 2017, Barcelona, Spain, publiziert.

Aus der ebenfalls auf die Anmelderin zurückgehenden
EP 3 428 756 A1 gehen ein Verfahren und ein System zur Integritätsüberwachung eines Automatisierungssystems hervor. Dabei wird ein Vergleich von Zustandsdaten des Automatisierungssystems und Sensordaten, welche eine Umweltbeeinflussung des Automatisierungssystems beschreiben, durchgeführt und auf Basis des Vergleichs die Integrität überwacht, um Beeinträchtigungen dieses aufgrund von Fremdzugriffen festzustellen. Dabei können je nach Art der Umweltbeeinflussung unterschiedlichste Sensoren zum Einsatz kommen. Beispielsweise kann die Umweltbeeinflussung eine Erwärmung oder Abkühlung der Umgebung des Automatisierungssystems umfassen. In einem solchen Fall ist es möglich, dass Temperatursensoren verwendet werden. In anderen Beispielen kann die Umweltbeeinflussung das Schalten von Ampeln oder Verkehrsführungssystemen umfassen. Dann können Videodaten, welche die Verkehrsführungssysteme abbilden, als Sensordaten erhalten werden. Im Zusammenhang mit der Energieerzeugung können beispielsweise auch Sensordaten erhalten werden, die indikativ für elektrische Kenngrößen sind, etwa Spannung oder Stromfluss oder Phasenverschiebung.

Aus der US 2016/0234241 A1 gehen ein Risiko-Management-Verfahren und -System hervor. Offenbart ist, dass mit einem industriellen Prozess-Steuerungs- und Automatisierungssystem assoziierte Risikodaten gesammelt und analysiert werden, um potentielle Sicherheitsprobleme zu identifizieren.

Aus der US 5,621,158 A1 ist bekannt, ein technisches System (z.B. Generator) zu überwachen, indem Sensorwerte ermittelt und überwacht werden. Es wird überprüft, ob die Sensorwerte innerhalb eines zulässigen Wertebereichs liegen. Die Grenzwerte werden abhängig vom lastabhängigen Betriebszustand des technischen Systems ermittelt.

Bekannt ist auch, Videosequenzen automatisiert zu analysieren und zu annotieren, siehe z.B. Andrea Miene, Otthein Herzog, "AVAnTA - Automatische Video Analyse und textuelle Annotation", In it + ti Informationstechnik und Technische Informatik, vol. 42, no. 6, pp. 24-27, 2000 (siehe http://ai.uni bre-men.de/team/bibtexbrowser.php?key=Miene2000&bib=bibfiles%252F allpublications.bib und https://www.idmt.fraunhofer.de/en/institute/projectsproducts/av-analyzing-toolbox.html).

Das Softwarepaket "Tracker" (siehe http://physlets.org/tracker/help/frameset.html) ermöglicht ferner eine optische Analyse von physikalischen Experimenten, z.B. im Schulunterricht. Es wird die Position, Geschwindigkeit und Beschleunigung eines Objekts erfasst. Es können reale physikalische Experimente mit theoretischen Modellen von einem Nutzer verglichen werden. In diesem Zusammenhang sei auch auf die Publikation "Simulating What You See" von Doug Brown und Wolfgang Christian, MPTL 16 and HSCI 2011, Ljubljana, Slovenia: Sept 15-17, 2011, verwiesen.

Es besteht weiterhin Bedarf an Verfahren zum Schutz der Integrität von cyber-physischen Systemen.

Ausgehend davon ist es eine Aufgabe der vorliegenden Erfindung, ein Verfahren zur Überwachung der Integrität eines insbesondere industriellen cyber-physischen Systems, etwa eines Automatisierungssystems anzugeben, das ein besonders hohes Maß an Schutz bietet und sich gleichzeitig mit vertretbarem Aufwand durchführen lässt. Darüber hinaus ist es eine Aufgabe der vorliegenden Erfindung, ein System zur Durchführung eines solchen Verfahrens anzugeben.

Die erstgenannte Aufgabe wird gelöst durch ein Verfahren zur Überwachung der Integrität eines insbesondere industriellen cyber-physischen Systems, welches wenigstens eine Automatisierungskomponente, von der im Betrieb mit Sensoren ermittelte Messwerte zyklisch erfasst und als Prozessabbild der Eingänge gespeichert werden und/oder wurden, und von der im Betrieb zyklisch Stellwerte für Aktoren berechnet und als Prozessabbild der Ausgänge gespeichert werden und/oder wurden, umfasst oder dadurch gebildet wird,
bei dem
a) einem Integritätsüberwachungs-Modul eine Folge zeitlich aufeinanderfolgender vollständiger und/oder partieller Prozessabbilder der Eingänge und/oder der Ausgänge der wenigstens einen Automatisierungskomponente breitgestellt wird,
b) das Integritätsüberwachungs-Modul eine erwartete Folge erwarteter zeitlich aufeinanderfolgender vollständiger und/oder partieller Prozessabbilder der Eingänge und/oder der Ausgänge der wenigstens einen Automatisierungskomponente berechnet, wobei für die Berechnung zumindest ein Teil wenigstens eines Prozessabbildes der in Schritt a) bereitgestellten Folge und wenigstens ein Modell eines in dem zu überwachenden cyber-physischen System ablaufenden technischen Prozesses und/oder wenigstens ein Modell der wenigstens einen Automatisierungskomponente verwendet wird,
c) die in Schritt a) bereitgestellte Folge oder wenigstens ein Teil dieser und die in Schritt b) berechnete erwartete Folge oder wenigstens ein Teil dieser miteinander verglichen und/oder analysiert werden, und
d) basierend auf dem Vergleich und/oder der Analyse die Integrität des zu überwachenden cyber-physischen Systems, insbesondere zumindest der wenigstens einen Automatisierungskomponente beurteilt wird.

Die von Sensoren erfassten Messdaten können der Automatisierungskomponente beispielsweise kontinuierlich und/oder ereignisgesteuert und/oder zyklisch zugeführt werden. Sie können durch die Automatisierungskomponente zyklisch erfasst werden, um ein Prozessabbild zu bestimmen. Ein zyklisches Zuführen von Messdaten kann mit dem Automatisierungskomponenteinternen Zyklus der Bildung von Prozessabbildern synchronisiert erfolgen.

Die zweitgenannte Aufgabe wird gelöst durch ein Integritätsüberwachungs-System umfassend wenigstens ein Integritätsüberwachungs-Modul, das dazu ausgebildet und/oder eingerichtet ist
- eine Folge zeitlich aufeinanderfolgender vollständiger und/oder partieller Prozessabbilder der Eingänge und/oder der Ausgänge wenigstens einer Automatisierungskomponente eines zu überwachenden cyber-physischen Systems zu empfangen,
- eine erwartete Folge erwarteter zeitlich aufeinanderfolgender vollständiger und/oder partieller Prozessabbilder der Eingänge und/oder der Ausgänge der wenigstens einen Automatisierungskomponente zu berechnen, wobei für die Berechnung zumindest ein Teil wenigstens eines Prozessabbildes der bereitgestellten Folge und wenigstens ein Modell eines in dem zu überwachenden cyber-physischen System ablaufenden technischen Prozesses und/oder wenigstens ein Modell der wenigstens einen Automatisierungskomponente verwendet wird,
- die bereitgestellte Folge oder wenigstens einen Teil dieser und die berechnete erwartete Folge oder wenigstens einen Teil dieser miteinander zu vergleichen und/oder zu analysieren, und
- bevorzugt die Integrität des zu überwachenden cyber-physischen Systems basierend auf dem Vergleich und/oder der Analyse zu beurteilen.

Die Grundidee der vorliegenden Erfindung besteht mit anderen Worten darin, die Integrität eines cyber-physischen Systems, etwa eines Automatisierungssystems unter Berücksichtigung einer Folge/Abfolge von Prozessabbildern (PIᵢ) zu prüfen. Dies kann auch als "Process Image Sequence Integrity" bezeichnet werden. Insbesondere wird geprüft, ob eine Abfolge/Reihenfolge/Sequenz von bevorzugt vertrauenswürdig ermittelten Prozessabbildern so zulässigerweise zustande gekommen sein kann. Dabei kann die zeitliche und inhaltliche Konsistenz der Prozessabbilder geprüft werden. Die Konsistenzprüfung wird insbesondere unter Verwendung einer erwarteten (mit anderen Worten geschätzten/approximierten) korrespondierenden Folge von Prozessabbildern (PI'ⱼ), bzw. erwarteten oder zulässigen oder physikalisch möglichen Veränderungen zwischen zwei oder mehreren Prozessabbildern realisiert. Weicht die erwartete Folge von Prozessabbildern zu sehr von der eigentlichen Prozessabbildfolge ab, kann dies als Indiz für eine Manipulation an der Automatisierungskomponente, etwa Steuerung, und/oder an Sensoren/Aktuatoren, und/oder des technischen Prozesses dienen. Es kann entsprechend eine Reaktion eingeleitet werden (z.B. Alarmsignal setzen).

Die Folge/Sequenz von Prozessabbildern wird dabei für eine erfindungsgemäße Überprüfung einer weiteren Komponente, dem Integritätsüberwachungs-Modul, bereitgestellt. Dieses kann beispielsweise in derselben Automatisierungskomponente, oder auch als zusätzliche, separate Komponente insbesondere in einem gemeinsamen Automatisierungsnetzwerk realisiert sein.

Eine Folge von Prozessbildern kann im Gegensatz zu einem einzelnen Prozessabbild u.a. dazu verwendet werden, den Verlauf des Steuervorgangs, sozusagen den "Kontrollfluss" und die Reaktion eines technischen Prozesses nachzuvollziehen bzw. zu analysieren. Insbesondere können so unerlaubte Schritte, beispielsweise durch eine kompromittierte Steuerkomponente, erfasst werden.

Durch die erfindungsgemäße Vorgehensweise kann der Vorgang eines Automatisierungsprozesses aktuell oder nachträglich verlässlich überprüft werden. Die diskretisierten Schritte und die Reihenfolge von Ereignissen eines Automatisierungsprozesses können so plausibilisiert werden.

Die erfindungsgemäße Überwachung lässt sich dabei mit geringem Aufwand durchführen, insbesondere unter Nutzung von Daten bzw. Werten, die ohnehin in einem zu überwachenden cyber-physischen System vorhanden sind, nämlich unter Nutzung der physikalischen Sensor- und/oder Aktuatordaten bzw. -werten. Trotz des geringen Aufwandes kann eine sehr zuverlässige Integritätsüberwachung erzielt werden.

Die Prozessabbilder werden vorzugsweise vertrauenswürdig ermittelt und kryptographisch geschützt, sodass sie selbst bei manipulierter Firmware/Software einer Automatisierungskomponente für eine verlässliche Integritätsüberwachung des technischen Systems benutzt werden können.

Unter Automatisierungskomponente kann im Zusammenhang mit der Erfindung insbesondere ein Automatisierungs- und/oder eine Steuerungseinrichtung bzw.-system bzw. eine Steuerung verstanden werden. Eine Automatisierungskomponente kann beispielsweise durch eine speicherprogrammierbare Steuerung (SPS) oder auch eine Steuerungs- und Überwachungseinrichtung, etwa in Form eines SCADA-Systems, gegeben sein. SCADA steht dabei für Supervisory Control and Data Acquisition. Beispielsweise kann eine Automatisierungskomponente auch ein Internet-of-Things-Gerät (IoT-Gerät) sein.

Bei einem Prozessabbild handelt es sich insbesondere um eine Prozesszustand, der Zustandsdaten eines Prozesszustands der Automatisierungskomponente umfasst. Dabei handelt es sich vorzugsweise um diejenigen Zustandsdaten, die eine Automatisierungs-Steuerungsfunktion der Automatisierungskomponente intern verwendet.

Unter Prozesszustand/Prozessabbild einer Automatisierungskomponente kann insbesondere ein interner, physikalischer Automatisierungsprozesszustand verstanden werden.

Automatisierungskomponenten, etwa Steuerungen verwalten intern ein Prozessabbild. Dabei handelt es sich in der Regel um den aktuellen Stand der Prozessvariablen eines technischen Systems, also die Prozessdaten. Es ist ein zyklisch gepuffertes Abbild der Ein-/Ausgabewerte. Eine Steuerungsanwendung arbeitet im Allgemeinen auf dem Prozessabbild (lesen, ändern). Das Prozessabbild, etwa einer speicherprogrammierbaren Steuerung, wird im Betrieb zyklisch aktualisiert bzw. gibt die Änderungen aus.

Die Zustandsdaten/Zustandsvariablen können bevorzugt mittels eines oder mehrerer Sensoren erfasst und/oder durch einen oder mehrere Aktuatoren ausgegeben werden. In anderen Worten, das Prozessabbild/der Prozesszustand ist beispielsweise eine Momentaufnahme der Eingänge und Ausgänge der Automatisierungskomponente, etwa Steuerung. Die Zustandsdaten des Prozesszustands/das Prozessabbild kann insbesondere intern von der Automatisierungskomponente verwaltet, z.B. im Arbeitsspeicher der Automatisierungskomponente, und bereitgestellt werden.

Bei den Zustandsvariablen bzw. Zustandswerten eines Prozessabbildes kann es sich beispielsweise um Druck-, Temperatur-, Durchfluss-, Gewicht-, Geschwindigkeits-, Drehzahl-Werte (in der Regel mittels Sensoren erfasst) und/oder Stellwerten insbesondere für Aktoren handeln. Eines von einer Vielzahl von zyklisch vorhandenen Prozessabbildern insbesondere einer Steuerung umfasst in der Regel jeweils mehrere Sensorwerte als Eingangswerte (zusammen ein Prozessabbild der Eingänge) und mehrere insbesondere unter Berücksichtigung der Sensorwerte berechnete Stellwerte als Ausgangswerte (zusammen Prozessabbild der Ausgänge). So kann ein Prozess in an sich bekannter Weise überwacht und gesteuert/geregelt werden.

Die Zustandsdaten des Prozessabbilds können beispielsweise zyklisch, ereignisgesteuert oder zu vorgegebenen Zeitpunkten bereitgestellt/empfangen/gespeichert/gepuffert werden.

Ebenso können Prozessdaten an ein SCADA-System zur Überwachung und Anzeige des technischen Systems übertragen werden (zyklisch, ereignisgesteuert oder auf Anfrage). Das SCADA-System kann die bereitgestellten Prozessdaten einer oder mehrerer Steuerungen in einen internen Speicher übernehmen, der die SCADA-Sicht auf den technischen Prozess darstellt.

Eine Folge von zeitlich aufeinanderfolgenden partiellen oder vollständigen Prozessabbildern umfasst zwei oder mehr Prozessabbilder PIᵢ, von denen eines zum (beliebigen) Zeitpunkt/Zyklus z1 und die weiteren zu nachfolgenden, späteren Zeitpunkten, Zyklen z2 (und ggf. z3, z4, ...) gehören bzw. erfasst/gespeichert wurden, also PI_{z1}, PI_{z2}, (PI_{z3}, PI_{z4},...). Es sei angemerkt, dass die (realen und/oder berechneten) partiellen oder vollständigen Prozessabbilder einer Folge aus unmittelbar aufeinanderfolgenden Zyklen stammen können jedoch nicht müssen. Es ist beispielsweise auch möglich, dass nur die partiellen oder vollständigen Prozessabbilder jedes zweiten, dritten, vierten oder ...x-ten Zyklus bereitgestellt werden. Auch ist es möglich, dass ein (insbesondere zyklisch gebildetes) Prozessabbild ereignisgesteuert bereitgestellt wird, z.B. abhängig von einer Änderung von Prozessvariablen des Proessabbilds.

Ferner kann für jede Zeitpunkt/Zyklus, für den bzw. aus dem ein "tatsächliches"/reales partielles oder vollständiges Prozessabbild bereitgestellt wird, ein korrespondierendes erwartetes partielles oder vollständiges Prozessabbild berechnet werden. Es ist aber auch möglich, dass dem nicht so ist, insbesondere sich der Zeitversatz dt (Zeitspanne zwischen zwei tatsächlichen bzw. berechneten Prozessabbildern einer Folge) für die reale und die berechneten Folgen unterscheidet.

Die erwartete Folge kann in Schritt b) beispielsweise berechnet werden, indem eine oder mehrere Variablen eines der Prozessabbilder der in Schritt a) bereitgestellten Folge wenigstens einem Modell des technischen Prozesses und/oder wenigstens einem Modell der wenigstens einen Automatisierungskomponente als Eingangswert oder Eingangswerte zugeführt werden und zeitlich beabstandete Ausgangswerte aus diesen insbesondere als erwartete vollständige oder partielle Prozessabbilder berechnet werden. Als Eingabe kann mit anderen Worten eine Folge von n ermittelten Prozessabbildern (PIᵢ, PIᵢ₊₁, ..., PIᵢ₊ₙ₋₁) dienen. Auf Basis der einzelnen Prozessabbilder und wenigstens einem Modell lassen sich Annäherungen PI'ᵢ etwa von einzelnen Prozessabbildern der Folge, oder auch der gesamten Folge berechnen.

Unter einem cyber-physischen System ist insbesondere ein Verbund informatischer/softwaretechnischer Komponenten mit mechanischen und elektronischen Teilen zu verstehen. Ein zu überwachendes, insbesondere industrielles cyber-physisches System kann beispielsweise eine beliebige Art von Automatisierungssystem, ein Kraftwerk, ein Energieverteilnetz, ein Umspannwerk, eine Fertigungslinie für Werkstücke oder Maschinen, eine Raffinerie, eine Pipeline, eine Kläranlage, ein Verkehrsleitsystem, ein medizinisches Gerät o. ä. implementieren. Beispiele für cyber-physische Systeme in Form von Automatisierungssysteme umfassen auch: eine Industrieanlage; eine Fertigungshalle; ein Umspannwerk; ein Roboter; ein Flurförderfahrzeug; ein autonomes Transportsystem; eine Werkzeugmaschine; eine Fräse; eine Presse; eine prozesstechnische Anlage; und einen 3D-Drucker.

Selbstverständlich ist es möglich, dass für die erfindungsgemäße Integritätsprüfung Prozessabbilder bzw. Prozessabbildfolgen von mehr als einer Automatisierungskomponente bereitgestellt/herangezogen werden. Dann kann jeder Automatisierungskomponente ein eigenes Integritätsüberwachungs-Modul zugeordnet sein, welches die Berechnung und den Vergleich und/oder die Analyse für die jeweilige Automatisierungskomponente absolviert. Die Automatisierungskomponenten können dann das jeweilige, ihnen zugeordnete, eigene Integritätsüberwachungs-Modul umfassen. Es ist auch möglich, dass ein Integritätsüberwachungs-Modul die Berechnung und den Vergleich und/oder die Analyse für mehrere Automatisierungskomponenten durchführt, beispielswiese ein zentrales Integritätsüberwachungs-Modul, welches an dem gleichen Netzwerk teilnimmt wie mehrere Automatisierungskomponenten und so Prozessabbildfolgen von diesen erhalten kann. Dann sind einem (zentralen) Integritätsüberwachungs-Modul mehrere Automatisierungskomponenten zugeordnet.

Das erfindungsgemäße Integritätsüberwachungs-System kann in bevorzugter Weiterbildung dazu ausgebildet und/oder eingerichtet sein, basierend auf dem Vergleich der bereitgestellten Folge oder wenigstens einem Teil und der berechneten erwarteten Folge oder wenigstens einem Teil dieser und/oder der Analyse die Integrität des zu überwachenden cyber-physischen Systems zu beurteilen.

In Weiterbildung der Erfindung kann ferner vorgesehen sein, dass das Integritätsüberwachungs-System, insbesondere das wenigstens eine Integritätsüberwachungs-Modul das wenigstens eine Modell des technischen Prozesses und/oder das wenigstens eine Modell der wenigstens einen Automatisierungskomponente umfasst, wobei das wenigstens eine Modell des technischen Prozesses und/oder das wenigstens eine Modell der wenigstens einen Automatisierungskomponente bevorzugt wenigstens ein insbesondere angelerntes neuronales Netz und/oder ein Neuronales-Netzwerk-Modell umfasst oder durch ein solches gegeben ist.

Das erfindungsgemäße Integritätsüberwachungs-System kann eine Recheneinrichtung, etwa einen (Industrie-)PC umfassen oder durch eine Recheneinrichtung gegeben sein, auf der bevorzugt eine geeignete Software installiert ist. Das erfindungsgemäße Integritätsüberwachungs-System umfasst besonders bevorzugt wenigstens einen Prozessor und/oder wenigstens einen Programmspeicher, der bzw. die eingerichtet ist bzw. sind, um die vorstehenden Schritte auszuführen. Es kann beispielsweise ein Analogrechner, ein digitaler Signalprozessor, ein FPGA-Baustein (Field-Programmable Gate Array), ein ASIC (Application Specific Integrated Circuit), ein Grafikprozessor GPU (Graphics Processing Unit), ein digitaler Signalprozessor, ein System-on-Chip, ein Artificial-Intelligence-Hardware-Beschleunigerbaustein, z.B. eine Tensor Processing Unit, und/oder ein Vektor-Prozessor (array processor) vorgesehen sein und verwendet werden.

Das erfindungsgemäße Integritätsüberwachungs-System kann ferner wenigstens ein Erfassungsmodul aufweisen, das dazu ausgebildet und/oder eingerichtet ist, aus einem Speicher, bevorzugt Arbeitsspeicher der wenigstens einen Automatisierungskomponente vollständige und/oder partielle Prozessabbilder der Eingänge und/oder Ausgänge auszulesen und dem oder wenigstens einem Integritätsüberwachungs-Modul bevorzugt in (kryptographisch) geschütztem Zustand zu übermitteln.

Es kann darüber hinaus wenigstens ein Sicherheitsmodul umfassen, welches dazu ausgebildet und/oder eingerichtet ist, für eine bereitgestellte Folge von vollständigen und/oder partiellen Prozessabbildern eine kryptographische Prüfsumme zu berechnen. Die kryptographische Prüfsumme kann beispielsweise ein Hash-Wert, ein Nachrichtenauthentisierungscode oder eine digitale Signatur sein.

Ein erfindungsgemäßes Integritäts-Überwachungssystem kann auch als ein virtuelles System, insbesondere in einer Cloud, bzw. durch einen IoT-Service bzw. eine Cloud-App realisiert sein.

Vor Ort kann ein erfindungsgemäßes Integritäts-Überwachungssystem beispielsweise innerhalb eines Steuernetzwerkes (etwa einer Automatisierungszelle) vorgesehen sein, um die Sensor- und/oder Aktuatordaten einer oder mehrerer Komponenten des Steuernetzwerkes zu erfassen und zu prüfen. Alternativ oder zusätzlich kann ein solches auch übergeordnet, beispielsweise in einem Anlagen- bzw. Fabriknetzwerk, vorgesehen sein. Insbesondere in diesem Fall kann es Daten von mehreren Steuernetzwerken (insbesondere Automatisierungszellen) oder von mehreren Maschinen erfassen und auf Übereinstimmung prüfen. Dazu können auch Daten eines SCADA-Systems und/oder eines Log-Servers und/oder eines Historian-Servers ausgelesen werden.

Es ist möglich, dass in einem cyber-physischen System mehrere Integritätsüberwachungs-Module und/oder mehrere Erfassungsmodule und/oder mehrere Sicherheitsmodule zum Einsatz kommen. Dies insbesondere für den Fall, dass ein cyber-physisches System mehrere Automatisierungskomponenten umfasst. Sind mehrere Module vorhanden, können diese Bestandteil eines erfindungsgemäßen Integritätsüberwachungs-Systems oder auch mehrerer erfindungsgemäßer Integritätsüberwachungs-Systeme sein. Kommen mehrere Integritätsüberwachungs-Module und/oder mehrere Erfassungsmodule und/oder mehrere Sicherheitsmodule (die zu einem oder auch mehreren erfindungsgemäßen Integritätsüberwachungs-Systemen gehören können) zum Einsatz, können diese über ein zu überwachendes cyber-physisches System verteilt angeordnet und über ein Kommunikationsnetzwerk, insbesondere des cyber-physischen Systems, kommunikativ verbunden sein. Beispielsweise kann mehreren Automatisierungskomponenten, etwa Steuerungen eines cyber-physischen Systems jeweils ein Erfassungsmodul zugeordnet sein, welches bevorzugt in die jeweilige Automatisierungskomponente integriert ist, was für eine manipulationsfreie Erfassung vorteilhaft ist. Dann können mehrere Erfassungsmodule in den Automatisierungskomponenten lokal und besonders sicher Prozessabbildfolgen erfassen und diese beispielsweise an ein zentrales Integritätsüberwachungs-Modul bevorzugt geschützt übertragen, welches die Überprüfung durchführt, insbesondere zugehörige erwartete Prozessabbildfolgen berechnet und diese mit den tatsächlichen, von den Erfassungsmodulen erfassten Folgen vergleicht.

Es ist natürlich auch möglich, dass ein erfindungsgemäßes Integritätsüberwachungs-System nur ein Integritätsüberwachungs-Modul aufweist oder auch durch ein Integritätsüberwachungs-Modul gebildet wird.

Das eine oder die mehreren Module, die das erfindungsgemäße System in vorteilhafter Ausbildung umfasst, können funktionale Module bzw. Einheiten darstellen, die beispielsweise durch verschiedene Software-Komponenten auch auf einer gemeinsamen Hardware implementiert sein können.

Das oder die Module könne auch (jeweils) durch eine Hardware-Implementierung realisiert werden, z.B. auf einem FPGA, DSP, ASIC.

Sind mehrere Module vorhanden, können diese diskret, also auf unterschiedlichen Bausteinen, oder gemeinsam auf einem Baustein, entweder in Software oder Hardware implementiert werden bzw. sein. Hardware kann beispielsweise in Form eines (Industrie-)PCs gegeben sein. Dabei kann es sich sowohl um einen extra für diesen Zweck bereitgestellten PC handeln als auch um einen solchen, der neben der erfindungsgemäßen Überwachung weiteren Funktionen dient.

Die Beurteilung der Integrität des zu überwachenden cyber-physischen Systems schließt bevorzugt die Beurteilung ein, ob sich zumindest ein Teil des cyber-physischen Systems, insbesondere zumindest die wenigstens eine Automatisierungskomponente, in einem manipulierten Zustand befindet. Für den Fall, dass ein manipulierter Zustand erkannt wird, wird bevorzugt ein Alarm ausgegeben und/oder das cyber-physische System, insbesondere zumindest die wenigstens eine Automatisierungskomponente in einen betriebssicheren Zustand überführt.

Beispielsweise kann vorgesehen sein, dass ein Alarm ausgegeben und/oder das überwachte cyber-physische System in einen betriebssicheren Zustand überführt wird, wenn eines oder mehrere der berechneten vollständigen oder partiellen Prozessabbilder der erwarteten Folge um mehr als ein vorgegebenes Maß von einem oder mehreren der tatsächlichen, realen bereitgestellten vollständigen oder partiellen Prozessabbilder abweicht. Alternativ oder zusätzlich kann vorgesehen sein, dass dies geschieht, wenn eine Abweichung über mehr als einen vorgegebenen (Grenz-)Zeitraum anhält.

In vorteilhafter Ausführung kann eine Alarmschwelle konfiguriert werden bzw. wird eine Alarmschwelle konfiguriert, das heißt wie empfindlich die Überwachung ist.

Auch ist es möglich, dass für den Fall, dass ein manipulierter Zustand erkannt wird, die Konfiguration des überwachten cyber-physischen Systems geändert wird, insbesondere derart, dass wenigstens eine Komponente dieses, die als manipuliert gilt, deaktiviert wird. Beispielsweise können einer oder mehrere Sensoren und/oder Aktuatoren, die nicht plausibel sind und daher als manipuliert gelten, und/oder die Automatisierungskomponente selber deaktiviert werden. Diese Ausführungsform bietet den Vorteil, dass mehrere redundante Komponenten, insbesondere Sensoren und/oder Aktuatoren in einem cyber-physischen System vorgesehen werden können. Es werden dann im laufenden Betrieb diejenigen deaktiviert, die nicht (mehr) plausibel sind. Insbesondere wenn unterschiedliche technische Realisierungen von Komponenten, etwa Sensoren und/oder Aktuatoren (z.B. unterschiedliche Betriebssysteme, unterschiedliche Bibliotheken, unterschiedliche Hardware-Basis, etc.) verwendet werden, kann dadurch die Angriffshürde, um ein cyber-physisches System, beispielsweise Automatisierungssystem erfolgreich zu manipulieren, weiter erhöht werden.

Für die Realisierung der Konsistenzprüfung, insbesondere die Berechnung der erwarteten Folge von vollständigen oder partiellen Prozessabbildern werden in weiterer vorteilhafter Ausgestaltung Projektierungs- und/oder Prozessmodelldaten und/oder Simulationsdaten und/oder neuronale Netze verwendet.

Entsprechend kann vorgesehen sein, dass für die Berechnung in Schritt b) wenigstens ein Modell der wenigstens einen Automatisierungskomponente verwendet wird, das zumindest einen Teil der Projektierungsdaten und/oder eines Steuerprogramms der wenigstens einen Automatisierungskomponente umfasst oder dadurch gegeben ist. Alternativ oder zusätzlich kann das in Schritt b) verwendete wenigstens eine Modell des technischen Prozesses und/oder das in Schritt b) verwendete wenigstens eine Modell der wenigstens einen Automatisierungskomponente wenigstens ein bevorzugt angelerntes neuronales Netz umfassen oder durch ein solches gegeben sein.

Projektierungs- und/oder Prozessmodelldaten und/oder Simulationsdaten fließen bevorzugt über wenigstens ein Modell der wenigstens einen Automatisierungskomponente ein. Simulationsdaten und/oder neuronale Netze fließen bevorzugt über wenigstens ein Modell des ablaufenden Prozesses ein.

Bei wenigstens einem Modell der wenigstens einen Automatisierungskomponente handelt es sich insbesondere um ein (mathematisches) Modell, welches das (Steuerungs- bzw. Automatisierungs-)Verhalten der wenigstens einen Automatisierungskomponente repräsentiert bzw. beschreibt. Es kann auch sein, dass wenigstens ein Modell der wenigstens einen Automatisierungskomponente ein solches (mathematisches) Modell umfasst.

Eines oder mehrere Modelle des Prozesses kann insbesondere zum Einsatz kommen, um aus einer "tatsächlichen", realen Folge von Prozessabbildern der Eingänge, also Sensorwerten, eine entsprechend erwartete Folge von Prozessabbildern der Eingängen, also erwartete Sensorwerte zu berechnen.

Eines oder mehrere Modelle der Automatisierungskomponente kann insbesondere zum Einsatz kommen, um aus einer "tatsächlichen", realen Folge von Prozessabbildern der Ausgänge (bzw. Teilen davon), also Aktuatorwerten, eine entsprechend erwartete Folge von Prozessabbildern der Ausgänge (bzw. Teilen davon), also erwartete Aktuatorwerte zu berechnen.

Auch kann vorgesehen sein, dass für die Berechnung in Schritt b) wenigstens eine Sensor-Fusion-Methode, insbesondere wenigsten ein Kalman-Filter verwendet wird. Dadurch können Zustandsdaten ausgehend von mehreren physikalisch erfassten Sensordaten geschätzt werden. Weiterhin kann beispielsweise ein "virtueller Sensor" realisiert werden, um physikalisch nicht direkt gemessene Zustandsdaten zu schätzen.

Sowohl die "tatsächliche", reale Folge von Prozessabbildern (der Eingänge und/oder Ausgänge) als auch die erwartete, berechnete Folge umfassen jeweils mehrere zeitlich aufeinanderfolgende Prozessabbilder (der Eingänge und/oder Ausgänge) bzw. Teile von diesen. Ein vollständiges Prozessabbild der Eingänge ist insbesondere ein solches, welches alle (aktuellen) Eingangsvariablen bzw. Eingangswerte, insbesondere alle aktuellen Sensorwerte, die einer gegebenen Automatisierungskomponente zugeführt werden bzw. zugeordnet sind, umfasst. Analog ist ein vollständiges Prozessabbild der Ausgänge insbesondere ein solches, welches alle (aktuellen) Ausgansvariablen bzw. Ausgangswerte, insbesondere alle aktuellen Stellwerte, die eine gegebene Automatisierungskomponente für ihr zugeordnete Aktuatoren berechnet, umfasst.

Es ist nicht erforderlich, dass die bereitgestellte Folge vollständige Prozessabbilder mit allen zu der Automatisierungskomponente gehörigen Ein- und Ausgangswerten umfasst. Mit anderen Worten muss nicht das gesamte Prozessabbild für die erfindungsgemäße Überwachung genutzt werden. Vielmehr kann es auch ausreichen, wenn beispielsweise nur einer oder nur einige der Eingangs-, insbesondere Sensorwerte und/oder nur einer oder einige der Ausgangs-, insbesondere Stellewerte eines Prozessabbildes einer Automatisierungskomponente bereitgestellt werden.

In analoger Weise gilt, dass es nicht erforderlich ist, dass eine erwartete Folge vollständiger Prozessabbilder berechnet wird, die jeweils berechnete Werte für alle zu der Automatisierungskomponente gehörigen Ein- und Ausgangswerte umfasst. Vielmehr kann es auch ausreichen, wenn beispielsweise nur einer oder nur einige erwartete Eingangs-, insbesondere Sensorwerte und/oder nur einer oder nur einige erwartete Ausgangs-, insbesondere Stellewerte eines Prozessabbildes einer Automatisierungskomponente berechnet werden.

Mit anderen Worten kann es ausreichen, wenn von der Gesamtheit der Sensoren und/oder Aktuatoren, die einer Automatisierungskomponente, etwa Steuerung zugeordnet sind, nur ein Teil für die erfindungsgemäße Integritätsüberwachung herangezogen werden.

Ein partielles (bereitgestelltes oder berechnetes) Prozessabbild kann durch nur einen (bereitgestellten oder berechneten) Eingangs-, insbesondere Sensorwert oder durch nur einen (bereitgestellten oder berechneten) Ausgangs-, insbesondere Stellwert gegeben sein.

Eine Folge von (erwarteten und/oder berechneten) Prozessabbildern umfasst wenigstens zwei partielle oder vollständige Prozessabbilder. Eine Folge von bereitgestellten vollständigen oder partiellen Prozessabbildern umfasst insbesondere mindestens drei, bevorzugt mindestens fünf, besonders bevorzugt mindestens zehn partielle oder vollständige Prozessabbilder. Je größer die Anzahl von Prozessabbildern ist, desto besser kann eine Auswertung prinzipiell erfolgen. Um jedoch den Speicherbedarf und den Rechenaufwand in Grenzen zu halten, ist eine Beschränkung auf eine geeignete Anzahl von zurückliegenden Prozessabbildern sinnvoll. Die zurückliegenden Prozessabbilder können gleiche oder unterschiedliche zeitliche Abstände aufweisen. So können beispielsweise vier oder acht zeitlich eng aufeinanderfolgende und nochmal vier oder acht zeitlich weiter zurückliegende und zeitlich weiter aufeinanderfolgende Prozessabbilder verwendet werden. Auch ist es möglich, die Anzahl und/oder den zeitlichen Abstand von verwendeten Prozessabbildern dynamisch anzupassen, z.B. abhängig von einem Fertigungsauftrag, einem Prozessschritt, oder abhängig von der ermittelten Abweichung zwischen erfassten Prozessabbildern und erwarteten, berechneten Prüf-Prozessabbildern.

Es sei angemerkt, dass die Anzahl von vollständigen oder partiellen Prozessabbildern der tatsächlichen, bereitgestellten Folge nicht mit der Anzahl von erwarteten, berechneten vollständigen oder partiellen Prozessabbildern der berechneten Folge übereinstimmen muss. Beispielsweise kann eine Folge von zehn ("tatsächlichen", realen) Prozessabbildern bzw. Teilen dieser bereitgestellt, jedoch nur eine Folge von beispielsweise zwei oder drei oder vier Prozessabbildern bzw. Teilen dieser als erwartete Prozessabbilder berechnet werden.

Weiterhin kann vorgesehen sein, dass in Schritt a) eine Folge zeitlich aufeinanderfolgender vollständiger und/oder partieller Prozessabbilder der Eingänge breitgestellt wird, und in Schritt b) eine erwartete Folge erwarteter zeitlich aufeinanderfolgender vollständiger und/oder partieller Prozessabbilder der Eingänge unter Verwendung wenigstens eines Modells des technischen Prozesses berechnet wird. Alternativ oder zusätzlich kann vorgesehen sein, dass in Schritt a) eine Folge zeitlich aufeinanderfolgender vollständiger und/oder partieller Prozessabbilder der Ausgänge breitgestellt wird, und in Schritt b) eine erwartete Folge erwarteter zeitlich aufeinanderfolgender vollständiger und/oder partieller Prozessabbilder der Ausgänge unter Verwendung wenigstens eines Modells der wenigstens einen Automatisierungskomponente berechnet wird. Dies hat sich als besonders geeignet erwiesen.

In einer besonders bevorzugten Ausgestaltung wird die Folge von vollständigen oder partiellen Prozessabbildern in Schritt a) in geschütztem Zustand, insbesondere durch eine kryptographische Prüfsumme geschützt bereitgestellt.

Es ist weiterhin möglich, dass dem Integritätsüberwachungs-Modul zusätzlich zu der in Schritt a) bereitgestellten Folge von partiellen oder vollständigen Prozessabbildern eine weitere Folge von zeitlich früher liegenden partiellen oder vollständigen Prozessabbildern bereitgestellt wird, und die weitere Folge bei der Berechnung in Schritt b) zusätzlich berücksichtigt wird. Auf der Basis von zusätzlichen, insbesondere gepufferten/gespeicherten vorherigen vollständigen oder partiellen Prozessabbildern können genauere Approximationen für die aktuell betrachtete, bereitgestellte Folge berechnet werden. So wird eine besonders genaue, verlässliche Überprüfung möglich.

Wenn in Schritt c) die bereitgestellte Folge oder wenigstens ein Teil dieser und die berechnete erwartete Folge oder wenigstens ein Teil dieser miteinander verglichen werden, kann der Vergleich einschließen, dass wenigstens eine Abweichung zwischen der in Schritt a) bereitgestellten Folge und der in Schritt b) berechneten Folge ermittelt und bevorzugt geprüft wird, ob die wenigstens eine Abweichung in einem zulässigen Bereich liegt. Die Abweichung zwischen zwei Prozessabbildern kann beispielsweise als Maximalwert, Summe oder Mittelwert der absoluten oder relativen Differenz der Variablenwerte der verglichenen Prozessabbilder ermittelt werden. Die Abweichung einer Folge von erfassten Prozessabbildern zu einer Folge von berechneten Prüf-Prozessabbildern kann als Maximalwert, Summe oder als Mittelwert der Abweichung der Prozessabbilder ermittelt werden.

Auch kann vorgesehen sein, dass der Vergleich in Schritt c) einschließt, dass einzelne der in Schritt a) bereitgestellten vollständigen oder partiellen Prozessabbilder (PIᵢ) mit einzelnen der in Schritt b) berechneten vollständigen oder partiellen Prozessabbilder (PI'ᵢ) verglichen werden und die Abweichungen ermittelt werden.

Alternativ oder zusätzlich kann vorgesehen sein, dass Änderungen zwischen den in Schritt a) bereitgestellten vollständigen oder partiellen Prozessabbildern ermittelt werden und Änderungen zwischen den in Schritt b) berechneten vollständigen oder partiellen Prozessabbildern ermittelt werden und bevorzugt diese Änderungen miteinander verglichen werden.

Insbesondere können einander entsprechende vollständigen oder partiellen Prozessabbilder (PIᵢ und PI'ⱼ) der Folgen (bereitgestellt und berechnet) direkt verglichen werden. Alternativ oder zusätzlich können auch nur die Änderungen zwischen aufeinanderfolgenden vollständigen oder partiellen Prozessabbildern auf Plausibilität geprüft werden. In beiden Fällen können Schwellwerte für die Abweichungen für die einzelnen Anteile eines Prozessabbildes (bestimmte Sensor- und Aktuatorwerte) in einer Policy definiert werden bzw. sein.

Eine weitere vorteilhafte Ausführungsform zeichnet sich dadurch aus, dass die Folge vollständiger und/oder partieller Prozessabbilder, die in Schritt a) dem Integritätsüberwachungs-Modul bereitgestellt wird, mittels eines Erfassungsmoduls insbesondere aus einem Speicher, bevorzugt Arbeitsspeicher der Automatisierungskomponente, etwa eine Steuerung, ausgelesen und dem Integritätsüberwachungs-Modul bereitgestellt wird, indem das Erfassungsmodul die Folge an das Integritätsüberwachungs-Modul bevorzugt in geschütztem Zustand übermittelt.

Darüber hinaus können die Schritte a) bis d) wiederholt durchgeführt werden. Die Durchführung kann dabei zyklisch und/oder ereignisgesteuert und/oder zu vorgegebenen Zeitpunkten erfolgen. Eine wiederholte Durchführung hat sich insbesondere parallel zum laufenden Betrieb als vorteilhaft erwiesen. So kann betriebsbegleitend, praktisch "online" die Integrität geprüft werden.

Alternativ oder zusätzlich zu einer betriebsbegleitenden Beobachtung kann auch eine Überprüfung im Nachhinein erfolgen, für die dann insbesondere "historische", gespeicherte Prozessabbildfolgen herangezogen werden können. Dies ermöglicht, die Integrität etwa eines Produktionsprozesses nachträglich zu überprüfen und beispielsweise davon abhängig ein gefertigtes Produkt freizugeben oder zurückzurufen.

Das erfindungsgemäße Verfahren kann vor Ort (lokal) für ein zu überwachendes cyber-physisches System durchgeführt werden.

Alternativ oder zusätzlich kann im Rahmen dieses Verfahrens auch eine (herkömmliche oder Edge-)Cloud genutzt werden. Die erfindungsgemäße Integritäts-Überwachung kann auch als Dienst in einer Cloud angeboten bzw. in einer Cloud durchgeführt werden. Insbesondere zumindest die Berechnung der erwarteten Folge erwarteter zeitlich aufeinanderfolgender vollständiger und/oder partieller Prozessabbilder der Eingänge und/oder der Ausgänge und/oder der Vergleich dieser mit einer bereitgestellten Folge können als Dienst in einer Cloud angeboten bzw. in einer Cloud durchgeführt werden. Dies ist besonders vorteilhaft, wenn auch wenigstens eine Komponente eines zu überwachenden cyber-physischen Systems, etwa wenigstens ein Roboter und/oder wenigstens eine Fertigungsmaschine ebenfalls aus der Cloud angesteuert werden (Cloud-Robotics). Eine Cloud bietet auch den Vorteil, dass Betriebsdaten anderen im Rahmen eines über die Cloud angebotenen Services, insbesondere einem Integritätsüberwachungs-Service, einfach zur Verfügung gestellt werden können.

Die Erfindung betrifft auch eine Automatisierungskomponente, insbesondere eine Steuerung, die ein erfindungsgemäßes Integritätsüberwachungs-System umfasst.

Ein weiterer Gegenstand der Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB- oder Flash-Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt jeweils in rein schematischer Darstellung
- FIG 1: mehrere Automatisierungskomponenten eines cyberphysischen Systems in einem Automatisierungsnetzwerk sowie mehrere Ausführungsbeispiele erfindungsgemäßer Integritätsüberwachungs-Systeme; und
- FIG 2: eine Automatisierungskomponente aus FIG 1 in vergrößerter Darstellung.

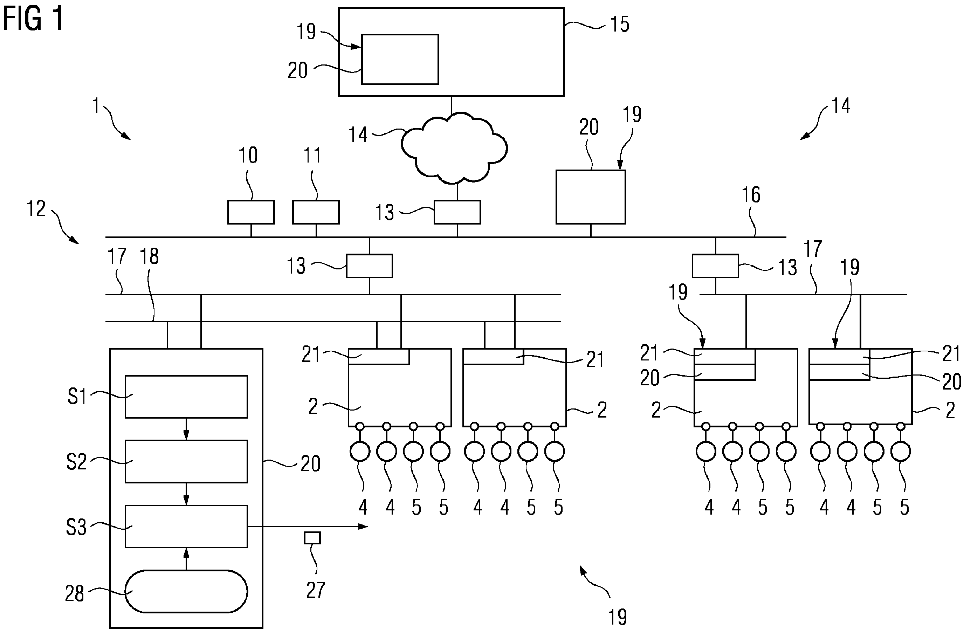

Die FIG 1 zeigt in rein schematischer Darstellung einige Komponenten eines cyber-physischen Systems, welches vorliegend durch ein industrielles Automatisierungssystem 1 gegeben ist.

Von dem Automatisierungssystem 1 sind konkret gezeigt vier Automatisierungskomponenten 2. Bei den Automatisierungskomponenten 2 handelt es sich vorliegend um speicherprogrammierbare Steuerungen (SPS). Die Automatisierungskomponenten 2 führen eine Steuerungsfunktion des technischen, cyber-physischen Systems 1 aus. Dazu sind über eine Ein-Ausgabeschnittstelle 3 der jeweiligen SPS 2 jeweils zwei Sensoren 4 und zwei Aktuatoren 5 verbunden. Der Steuerprogrammcode ist in einem nichtflüchtigen Speicher 6 (englisch: firmware flash) abgelegt.

Im Betrieb erfasst in hinlänglich vorbekannter Weise jede SPS 2 zyklisch Messwerte, die mit den dieser jeweils zugeordneten Sensoren 4 aufgenommen wurden und dieser werden als Prozessabbild PI der Eingänge gespeichert. Von jeder SPS 2 werden ferner in ebenfalls hinlänglich vorbekannter Weise unter Berücksichtigung der Messwerte zyklisch Stellwerte für die der jeweiligen SPS 2 zugeordneten Aktoren 5 berechnet und als Prozessabbild PI der Ausgänge gespeichert.

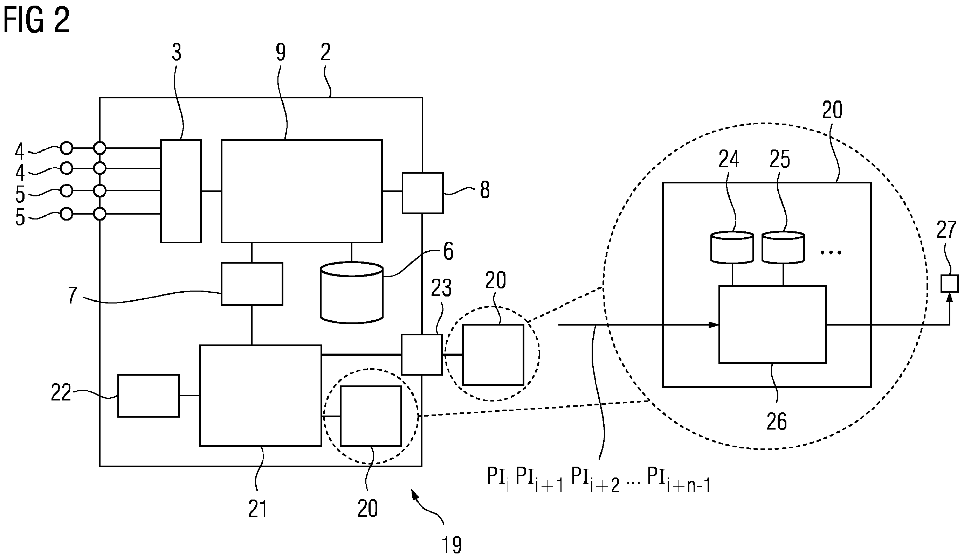

Arbeitsdaten sind in einem Arbeitsspeicher (RAM) 7 der jeweiligen SPS 2 abgelegt (siehe die vergrößerte Darstellung in FIG 2). Der Arbeitsspeicher 7 enthält (unter anderem) das Prozessabbild PI (englisch: process image) des technischen Systems 1, d.h. die aktuellen Sensormesswerte und die aktuellen Aktuatorstellwerte. Ein vollständiges Prozessabbild PI einer SPS 2 umfasst ein vollständiges Prozessabbild PI der Eingänge (alle Sensormesswerte) und der Ausgänge (alle Aktuatorstellwerte).

Über eine erste Netzwerkschnittstelle 8 (englisch: network interface) kann die CPU 9 der (jeweiligen) SPS 2 Steuerkommandos und Überwachungsdaten mit einem übergeordneten System austauschen, z.B. über OPC UA.

Weiterhin in FIG 1 dargestellt sind ein SCADA-System 10 und ein Log-Server 11. Mit diesen kann beispielsweise u.a. ein Austausch von Daten über die Netzwerkschnittstelle 8 der jeweiligen SPS 2 erfolgen.

Die Komponenten 2, 4, 5, 10, 11 bilden allesamt in an sich bekannter Weise Teilnehmer eines Netzwerkes 12 des Automatisierungssystems 1, das über ein IoT-Gateway 13 mit einem Netzwerk 14, z.B. dem Internet, verbunden ist. Die Abkürzung IoT steht dabei in hinlänglich vorbekannter Weise für "Internet of Things", in das Deutsche übersetzt das "Internet der Dinge". Ebenfalls dargestellt ist ein IoT-Backend 15.

Das Automatisierungsnetzwerk 12 weist mehrere Teilnetze in unterschiedlichen hierarchischen Ebenen auf, konkret ein Anlagennetz 16 in einer oberen Ebene und zwei Steuernetze 17, die jeweils über ein Gateway 13 mit dem darüber liegenden Anlagennetz 15 verbunden sind. Wie man erkennt, liegen von den vier SPS 2 jeweils zwei in einem der Steuernetze 17, während das SCADA-System 10 und der Log-Server 11 in der oberen Ebene, also im Anlagennetz 16 liegen. Es ist ferner ein Überwachungs- bzw. Monitoring-Netz 18 vorhanden.

Die nur beispielshaft dargestellten Komponenten befinden sich zusammen mit einer Vielzahl weiterer Komponenten des Automatisierungssystem 1 beispielsweise in einer Halle. Das Automatisierungssystem 1 kommt bei dem hier beschriebenen Ausführungsbeispiel zur Herstellung von Produkten zum Einsatz, wobei auch dies rein beispielhaft zu verstehen ist.

In der FIG 1 weiterhin zu erkennen sind fünf Ausführungsbeispiele erfindungsgemäßer Integritätsüberwachungs-Systeme 19. Von diesen sind vier lokal in dem Automatisierungssystem 1 vorgesehen bzw. implementiert. Dabei befindet sich ein lokales Integritätsüberwachungs-System 19 in jeder der beiden SPS 2, die in dem in FIG 1 rechten Steuernetz 17 liegen. Jedes dieser beiden lokalen Integritätsüberwachungs-Systeme 19 umfasst ein Integritätsüberwachungs-Modul 20, ein Erfassungsmodul 21 und ein Sicherheitsmodul 22, die in der jeweiligen SPS 2 implementiert sind. Letztere beiden Module 21, 22 sind nur in der FIG 2 zu erkennen, die beispielhaft eine SPS 2 in vergrößerter Darstellung zeigt.

Das dritte lokal vorgesehene Integritätsüberwachungs-System 19 liegt in dem in FIG 1 linken Steuer- 17 sowie Monitoring-Netz 18. Dieses wird durch ein zentrales Integritätsüberwachungs-Modul 19, zwei separat von diesem vorgesehene, diesem zugeordnete Erfassungsmodule 21 und zwei Sicherheitsmodule 22, von denen jeweils eines mit einem der Erfassungsmodule 21 verbunden ist, gebildet. Jeweils ein Erfassungsmodul 21 und damit verbundenes Sicherheitsmodul 22 ist dabei in einer der beiden SPS 2 vorgesehen bzw. implementiert, die in dem in FIG 1 linken Steuernetz 17 liegen. Das Integritätsüberwachungs-Modul 20 des dritten lokalen Integritätsüberwachungs-Systems 19 ist hingegen als zu den SPS 2 separates Modul ausgebildet, welches auf zu den SPS 2 separater Hardware implementiert ist. Vorliegend ist es auf einem zu den SPS 2 separaten Industrie-PC implementiert, der an dem Monitoring-Netz 18 teilnimmt. Der Industrie-PC kann z.B. ein auf einer Intel- oder AMD-CPU basiertes PC-artiges Computersystem sein, auf dem ein Linux- oder Windows-Betriebssystem ausführbar ist bzw. ausgeführt wird. Es kann sich auch um einen IoT-Edge-Rechner handeln, der z.B. ein auf einer Intel, AMD, ARM, MIPS, RISC V CPU oder einem System-on-Chip oder einem DSP basiert.

Das vierte lokale Integritätsüberwachungs-System 19 liegt in dem Anlagennetz 16. Dieses wird durch ein Integritätsüberwachungs-Modul 19 gebildet, welches bei dem dargestellten Beispiel auf einem weiteren Industrie-PC implementiert ist. Dieses Ausführungsbeispiel eines erfindungsgemäßen Systems 19 umfasst im Gegensatz zu den vorstehend beschriebenen Beispielen somit weder eines oder mehrere Erfassungs- 21 noch eines oder mehrere Sicherheitsmodule 22.

Das fünfte, ebenfalls nicht lokale sondern entfernt von dem Automatisierungssystem 1 angeordnete, insbesondere nicht in der gleichen Halle positionierte Integritätsüberwachungs-System 19 wird ebenfalls durch ein Integritätsüberwachungs-Modul 20 gebildet. Konkret durch ein Integritätsüberwachungs-Modul 20, welches in dem IoT-Backend 15 implementiert und via Internet 14 mit dem Automatisierungssystem 1 verbunden ist. Das Integritätsüberwachungs-Modul 20 kann als Service, z.B. als virtuelle Maschine (virtual machine) oder als Container im IoT-Backend 14, z.B. Siemens Mindsphere, Microsoft Azure oder Amazon AWS, implementiert sein.

Die Erfassungsmodule 21, von denen sich jeweils eines auf einer der vier SPS 2 befindet, sind jeweils dazu ausgebildet und eingerichtet, aus einem Speicher, bevorzugt dem Arbeitsspeicher RAM der jeweiligen SPS 2 zyklisch Folgen PI_{i,i+1,i+2,...} von vollständigen und/oder partiellen Prozessabbildern PI der Eingänge und Ausgänge auszulesen und die jeweilige Prozessabbildfolge PI_{i,i+1,i+2,...} wenigstens einem der Integritätsüberwachungs-Module 20 in geschütztem Zustand zu übermitteln und somit bereitzustellen.

Konkret sind bei dem dargestellten Ausführungsbeispiel die Erfassungsmodule 21 jeweils dazu ausgebildet und eingerichtet, eine Folge PI_{i,i+1,i+2,...} von vollständigen und/oder partiellen Prozessabbildern der jeweiligen SPS 2 vertrauenswürdig zu ermitteln, was z.B. durch ein separates Hardware Security Modul oder durch eine vom regulären Programmcode separierte vertrauenswürdige Ausführungsumgebung (sogenannte Trusted Execution Environment) des jeweiligen Erfassungsmoduls 21 realisiert sein kann. Die Folge PI_{i,i+1,i+2,...} von vollständigen und/oder partiellen Prozessabbildern kann dabei z.B. durch Puffern einer bestimmten Anzahl von zyklisch ermittelten Prozessabbildern PI erzeugt werden. Es sei angemerkt, dass es sowohl möglich ist, dass die Erfassungsmodule 21 mehrere zeitlich nacheinander liegende Prozessabbilder PI puffern/zwischenspeichern und diese dann als (zusammenhängende) Prozessabbildfolge/-sequenz PIᵢ übermitteln als auch, dass mehrere einzelne erfasste Prozessabbilder PI nacheinander übermittelt werden und das (jeweilige) Integritätsüberwachungs-Modul 20 auf diese Weise eine Prozessabbildfolge/- sequenz PI_{i,i+1,i+2,...} erhält (sozusagen "stückweise").

Neben dem eigentlichen Speicherinhalt kann ein Zeitstempel und/oder eine Identifizierungsinformation der SPS 2 in der jeweiligen, an wenigstens ein Integritätsüberwachungs-Modul 20 übertragenen Folge PI_{i,i+1,i+2,...} enthalten sein.

Die Erfassung/Ermittlung der Folgen PI_{i,i+1,i+2,...} erfolgt beispielsweise parallel oder nachgelagert zu dem zyklischen Auslesen der Sensoren 4 und/oder Ansteuern der Aktoren 5 durch die jeweilige SPS 2.

Die ermittelten Daten können durch eine kryptographische Prüfsumme geschützt werden, z.B. einen kryptographischen Hash-Wert, einen Nachrichtenauthentisierungscode oder eine digitale Signatur. Im dargestellten Beispiel kommen dazu die Sicherheitsmodule 22 zum Einsatz, um eine kryptographische Prüfsumme eines ermittelten Prozessabbilds und/oder eines partiellen Prozessabbilds und/oder der jeweils ermitteln Folge PI_{i,i+1,i+2,...} von Prozessabbildern zu bilden. Jede SPS 2 weist bei dem gezeigten Beispiel ein solches Sicherheitsmodul 22 auf, welches dem jeweiligen Erfassungsmodul 21 zugeordnet und mit diesem verbunden ist (siehe FIG 2). Es ist natürlich auch nicht ausgeschlossen, dass alternativ dazu ein Sicherheitsmodul 22 Bestandteil eines Erfassungsmoduls 21 ist.

Die erhaltene, kryptographisch geschützte Datenstruktur kann über eine weitere Netzwerkschnittstelle 23 der jeweiligen SPS 2 auch einem Monitoring bzw. Automatisierungsnetzwerk bereitgestellt werden, z.B. in Form einer Blockchain-Transaktion.

Es sei angemerkt, dass die beiden SPS 2, die in dem in FIG 1 rechten Steuernetz 17 liegen und jeweils ein Integritätsüberwachungs-Modul 20, ein Erfassungsmodul 21 und ein Sicherheitsmodul 22 aufweisen, Ausführungsbeispiele erfindungsgemäßer Automatisierungskomponenten darstellen. Die beiden SPS 2, die in dem in FIG 1 linken Steuernetz 17 liegen und die ein Erfassungsmodul 21 und ein Sicherheitsmodul 22 jedoch kein Integritätsüberwachungs-Modul 20 aufweisen, können beispielsweise solche Automatisierungskomponenten sein, wie sie in der ebenfalls auf die Anmelderin zurückgehenden europäischen Patentanmeldung Nr. 18201615.4 beschrieben sind, die eine Vorrichtung zur Bereitstellung einer Datenstruktur umfassen.

Ferner sei angemerkt, dass das Integritätsüberwachungs-Modul 20, welches in dem Monitoring-Netz 18 liegt, Prozessabbildfolgen PI_{i,i+1,i+2,...} von den Erfassungsmodulen 21 der beiden ebenfalls in diesem Netz 18 liegenden SPS 2 erhalten kann. Diese beiden Erfassungsmodule 21 bzw. diese umfassenden SPS 2 sind vorliegend diesem Integritätsüberwachungs-Modul 20 zugeordnet.

Die Integritätsüberwachungs-Module 20 der beiden SPS 2 in dem in FIG 1 rechten Steuernetzwerk 17 erhalten Prozessabbildfolgen PI_{i,i+1,i+2,...} jeweils nur von dem in die jeweilige SPS 2 integrierten Erfassungsmodul 21. Diesen beiden Integritätsüberwachungs-Modulen 20 ist somit jeweils nur ein Erfassungsmodul 21, welches in der gleichen SPS 2 untergebracht ist, zugeordnet.

Das Integritätsüberwachungs-Modul 20, das in dem Anlagennetz 16 liegt, kann Prozessabbildfolgen PI_{i,i+1,i+2,...} von den Erfassungsmodulen 21 aller vier SPS 2 erhalten. Diesem sind somit alle vier Erfassungsmodule 21 bzw. zugehörige SPS 2 zugeordnet. Insbesondere dieses Integritätsüberwachungs-Modul 20 kann ferner gespeicherte, aus zurückliegenden Zeiten stammende Prozessabbildfolgen PI_{i,i+1,i+2,...} von dem SCADA-System 10 und/oder Log-Server 11 erhalten, um aufgezeichnete/historische Daten zu analysieren.

Gleiches gilt für das Integritätsüberwachungs-Modul 20, welches in dem IoT-Backend 15 implementiert ist. Diesem sind ebenfalls alle vier Erfassungsmodule 21 und zugehörigen SPS 2 zugeordnet und es kann Daten von diesen sowie Daten von dem SCADA-System 10 und/oder Log-Server 11 erhalten. Es kann zusätzlich Prozessabbildfolgen PI_{i,i+1,i+2,...} von weiteren, in den Figuren nicht dargestellten Automatisierungssystemen erhalten, die sich an anderen Orten befinden. Dies macht einen "Cross-Check" möglich.

Wie das dargestellte Beispiel zeigt, kann ein Integritätsüberwachungs-Modul 20 prinzipiell entweder in derselben SPS 2 realisiert sein, von welcher die Folgen von Prozessabbildern stammen (siehe die beiden rechten Automatisierungskomponenten 2 in FIG 1, die jeweils neben der Erfassungs- 21 und Sicherheitsmodul 22 auch ein Integritätsüberwachungs-Modul 20 aufweisen), oder als zusätzliches Modul bzw. zusätzliche Komponente in einem gemeinsamen Netzwerk (siehe das Monitoring-Netz 18 in FIG 1, wo die beiden SPS 2 nur jeweils ein Erfassungs- 21 und Sicherheitsmodul 22 aufweisen und das Integritätsüberwachungs-Modul 20 separat zu diesen realisiert ist und im gleichen Netz 18 liegt sowie das Integritätsüberwachungs-Modul 20 im IoT-Backend 15).

Es sei angemerkt, dass die FIG 2 rein schematisch sowohl den Fall zeigt, dass sich ein Integritätsüberwachungs-Modul 20 in der SPS 2 befindet (in FIG 2 unten rechts in der SPS 2 dargestellt), als auch der Fall, dass das Erfassungsmodul 21 Prozessabbildfolgen PI_{i,i+1,i+2,...} über eine Netzwerkschnittstelle 23 an ein zu der SPS 2 separates Integritätsüberwachungs-Modul 20 übergibt. Die Netzwerkschnittstelle 23 ermöglicht die Verbindung der dann entkoppelten Module 21, 22. Für beide Fälle, die keine Alternativen darstellen müssen, sondern auch gemeinsam verwirklicht sein können, gilt die vergrößerte Darstellung des Integritätsüberwachungs-Moduls 20 in der FIG 2 rechts.

Von den fünf in FIG 1 erkennbaren Integritätsüberwachungs-Modulen 20 ist jedes dazu ausgebildet und eingerichtet, eine erwartete Folge PI'_{i,i+1,i+2,...} erwarteter zeitlich aufeinanderfolgender vollständiger und/oder partieller Prozessabbilder PI' der Eingänge und der Ausgänge wenigstens einer dem jeweiligen Integritätsüberwachungs-Modul 20 zugeordneten SPS 2 zu berechnen, wobei für die Berechnung zumindest ein Teil wenigstens eines Prozessabbildes PI einer dem jeweiligen Integritätsüberwachungs-Modul 20 von einem Erfassungsmodul 21 bereitgestellten Folge PI_{i,i+1,i+2,...} und ein Modell 24 eines in dem zu überwachenden cyber-physischen System 1 ablaufenden technischen Prozesses und/oder ein Modell 25 der jeweiligen SPS 2, von der die erfasste, bereitgestellte Folge PI_{i,i+1,i+2,...} stammt, verwendet wird.

Jedes Integritätsüberwachungs-Modul 20 umfasst ein Prozessabbild-Verifizierungs-Logik-Modul 26 (siehe die vergrößerte Darstellung eines Integritätsüberwachungs-Moduls 20 in der FIG 2, rechts), welche dazu ausgebildet und/oder eingerichtet ist, die Berechnung unter Rückgriff auf das/die Modelle 24, 25 durchzuführen. Die Punkte "..." neben dem Modell 25 in FIG 2, rechts sollen andeuten, dass zusätzlich weitere Modelle und Aspekte bei der Berechnung berücksichtigt werden können.

Bei dem Modell 24 handelt es sich insbesondere um ein mathematisches Modell des gesteuerten, technischen Prozesses. Ein solches kann insbesondere verwendet werden, um in Kombination mit einem Prozessabbild PIᵢ zum Zeitpunkt/Zyklus i die erwartete Reaktion (speziell Sensorwerte für die folgenden Prozessabbilder PI'ᵢ₊₁, PI'ᵢ₊₂,...) des technischen Systems 1 zu ermitteln.

Das Modell 25 der (jeweiligen) SPS 2 umfasst vorliegend zumindest einen Teil der Projektierungsdaten und/oder eines Steuerprogramms der SPS 2 bzw. wird durch solche gebildet. Die Projektierungsdaten und/oder das Steuerungsprogramm der betrachteten SPS 2 geben Auskunft über deren Verhalten. Sie können demnach in Kombination mit (wenigstens) einem Prozessabbild PIᵢ zum Zeitpunkt/Zyklus i, insbesondere dem frühesten Zeitpunkt/Zyklus einer Folge verwendet werden, um die erwartete Reaktion (speziell Aktuatorwerte für die folgenden Prozessabbilder PI'ᵢ₊₁, PI'ᵢ₊₂,...) einer SPS 2 zu berechnen.

Zumindest das Modell 24 des technischen Prozesses umfasst jeweils bevorzugt wenigstens ein insbesondere angelerntes neuronales Netz oder ist durch ein solches gegeben.

Das Prozessabbild-Verifizierungs-Logik-Modul 26 ist ferner dazu ausgebildet und eingerichtet, bereitgestellte Folgen PI_{i,i+1,i+2,...} oder wenigstens ein Teil dieser mit berechneten erwarteten Folgen PI'ᵢ oder wenigstens einem Teil dieser zu vergleichen und zu analysieren sowie die Integrität des zu überwachenden cyber-physischen Systems, insbesondere zumindest von der jeweiligen SPS 2, von der die jeweilige erfasste Folge PIᵢ stammt und/oder von wenigstens einem mit dieser verbundenen Sensor 4 und/oder Aktuator 5, auf Basis des Vergleichs und der Analyse zu beurteilen.

Die Beurteilung der Integrität des zu überwachenden cyber-physischen Systems 1 schließt dabei die Beurteilung ein, ob sich zumindest ein Teil des cyber-physischen Systems 1, insbesondere zumindest die jeweilige SPS 2, von der die jeweilige erfasste Folge PIᵢ stammt und/oder wenigstens ein mit dieser verbundener Sensor 4 und/oder Aktuator 5 und/oder der ablaufende technische Prozess in einem manipulierten Zustand befindet.

Die Integritätsüberwachungs-Systeme 19, vorliegend deren Prozessabbild-Verifizierungs-Logik-Module 26 sind ferner jeweils dazu ausgebildet und eingerichtet, für den Fall, dass ein manipulierter Zustand (der jeweiligen SPS 2 und/oder wenigstens eines damit verbundenen Sensors 4 und/oder Aktuators 5) erkannt wird, einen Alarm 27 auszugeben und/oder das cyber-physische System 1, insbesondere zumindest die betroffene SPS 2 in einen sicheren Zustand zu überführen. Auch ist es möglich, dass für den Fall, dass ein manipulierter Zustand erkannt wird, die Konfiguration des überwachten cyber-physischen Systems 1 geändert wird, insbesondere derart, dass wenigstens eine Komponente dieses, die als manipuliert gilt, deaktiviert wird, etwa wenigstens eine SPS 2 bzw. wenigstens ein Sensor 4 und/oder Aktor 5.

Unter Verwendung der erfindungsgemäßen Integritätsüberwachungs-Systeme 19 wird im laufenden Betrieb des Automatisierungssystems 1 ein Ausführungsbeispiel des erfindungsgemäßen Verfahrens zur Überwachung durchgeführt. Einige Schritte dieses (einer Iteration) können dem Flussdiagramm entnommen werden, welches in FIG 1 innerhalb desjenigen Integritätsüberwachungs-Moduls 20, welches in dem Monitoring-Netz 18 liegt (FIG 1 unten links) dargestellt ist.

In einem ersten Schritt S1 werden (jeweils) von den Erfassungsmodulen 21 Folgen/Sequenzen PI_{i,i+1,i+2,...} zeitlich aufeinanderfolgender vollständiger Prozessabbilder der Eingänge und der Ausgänge der jeweiligen SPS 2 geschützt erfasst, wobei das jeweilige Sicherheitsmodul 22 zum Einsatz kommt, und die erfassten vollständigen Prozessabbildfolgen PI_{i,i+1,i+2,...} der Eingänge und Ausgänge werden wenigstens einem zugeordneten Integritätsüberwachungs-Modul 20 übermittelt, also diesem bereitgestellt. Die Erfassung kann durch Auslesen der Prozessabbilder PI bzw. Teilen dieser erfolgen, was beispielsweise (jeweils) parallel oder nachgelagert zu dem zyklischen Auslesen der Sensoren 4 und/oder Ansteuern der Aktuatoren 5 durch die jeweiligen SPS 2 erfolgen kann.

Es sei angemerkt, dass bei dem hier beschriebenen Ausführungsbeispiel jeweils vollständige Prozessabbilder der Eingänge und der Ausgänge erfasst und bereitgestellt werden. Dabei umfasst ein vollständiges Prozessabbild PI der Eingänge der jeweiligen SPS 2 jeweils die zu einem Zeitpunkt/in einem Zyklus erfassten Messwerte aller drei mit der jeweiligen SPS 2 verbundenen Sensoren 4 und ein vollständiges Prozessabbild der Ausgänge der jeweiligen SPS 2 jeweils die zu einem Zeitpunkt/in einem Zyklus berechneten Stellwerte für alle drei mit der jeweiligen SPS 2 verbundenen Aktuatoren 5. Es sei betont, dass es alternativ auch ausreichend wäre, nur partielle Prozessabbilder PI der Eingänge und/oder nur partielle Prozessabbilder PI der Ausgänge bzw. Folgen solcher breitzustellen. Ein partielles Prozessabbild PI der Eingänge einer SPS 2 wäre vorliegend durch den Messwert von nur einem der drei Sensoren 4 einer SPS 2 oder durch zwei Messerwerte von nur zwei Sensoren 4 einer SPS 2 gegeben. In analoger Weise wäre ein partielles Prozessabbild PI der Ausgänge durch die Stellwerte nur eines Aktuators 5 oder die Stellwerte von nur zwei der drei Aktuatoren 5 einer SPS 2 gegeben.

Das jeweilige Integritätsüberwachungs-Modul 20, konkret dessen Prozessabbild-Verifizierungs-Logik-Modul 26 berechnet im nächsten Schritt S2 eine erwartete Folge PI'_{i,i+1,i+2,...} erwarteter zeitlich aufeinanderfolgender vollständiger Prozessabbilder der Eingänge und der Ausgänge der jeweiligen SPS 2. Für die Berechnung wird dabei zumindest ein Teil wenigstens eines der Prozessabbilder PI der in Schritt S1 bereitgestellten Folge PI_{i,i+1,i+2,...} und das Modell 24 des in dem zu überwachenden cyber-physischen System ablaufenden technischen Prozesses und/oder das Modell 25 der (jeweiligen) SPS 2 verwendet (siehe FIG 2 rechts).

Dabei wird unter Verwendung des Modells 24 des technischen Prozesses aus einem Teil der bereitgestellten Prozessabbildfolge PI_{i,i+1,i+2,...} der Eingänge eine erwartete Folge PI'_{i,i+1,i+2,...} erwarteter zeitlich aufeinanderfolgender vollständiger und/oder partieller Prozessabbilder der Eingänge berechnet. Unter Verwendung des Modells 25 der (jeweiligen) SPS 2 mit Projektierungsdaten wird aus einem Teil der bereitgestellten Prozessabbildfolge Pi_{i,i+1,i+2,...} der Ausgänge eine erwartete Folge PI'_{i,i+1,i+12,...}erwarteter zeitlich aufeinanderfolgender vollständiger und/oder partieller Prozessabbilder der Ausgänge berechnet.

Konkret wird die erwartete Folge PI'_{i,i+1,i+2,...}der Prozessabbilder des Eingangs bzw. Ausgangs berechnet, indem eine oder mehrere Variablen eines der Prozessabbilder PI der in Schritt S1 bereitgestellten Prozessabbildfolge PI_{i,i+1,i+2,...} dem Modell 24 des technischen Prozesses bzw. dem Modell 25 der (jeweiligen) SPS 2 als Eingangswert oder Eingangswerte zugeführt werden und zeitlich beabstandete Ausgangswerte aus diesen berechnet werden.

Es sei angemerkt, dass ein einziges partielles oder vollständiges Prozessabbild PI einer bereitgestellten Prozessabbildfolge PI_{i,i+1,i+2,...} bzw. eine einzige Variable eines solchen, insbesondere ein einziger Sensor- oder Aktuatorwert jeweils als Eingangswert für die Berechnung genügen kann, beispielsweise ein erstes partielles oder vollständiges Prozessabbild des Eingangs bzw. Ausgangs, etwa ein partielles oder vollständiges Prozessabbild PIᵢ bzw. Variable eines solchen vom/zum Zeitpunkt/Zyklus i. Es ist aber auch möglich, mehrere Variablen partieller oder vollständiger Prozessabbilder PI heranzuziehen.

Zusätzlich zu wenigstens einem Modell 25 der jeweilige Steuerung 2, ggf. mit Projektierungsdaten, und/oder einem Modell 24 des Prozesses können auch noch vorherige Prozessbilder PI_{i-1,i-2,i-3,...} (also PIⱼ für j<i) bei der Berechnung/Approximation berücksichtigt werden. Dem jeweiligen Integritätsüberwachungs-Modul 20 kann daher zusätzlich zu der bereitgestellten Folge von partiellen oder vollständigen Prozessabbildern PI_{i,i+1,i+2,...} eine weitere Folge von zeitlich früher liegenden partiellen oder vollständigen Prozessabbildern PI_{i-1,i-2,i-3,...} bereitgestellt werden, und die weitere, frühere Folge PI_{i-1,i-2,i-3,...} kann bei der Berechnung zusätzlich berücksichtigt werden. Auf der Basis von gepufferten/gespeicherten vorherigen Prozessabbildern PIᵢ₋₁, PIᵢ₋₂, PIᵢ₋₃,... können noch genauere Approximationen für die aktuell betrachtete Folge PI_{i,i+1,i+2,...} erhalten werden.

Im Anschluss an die Berechnung/Approximation einer zugehörigen erwarteten Folge PI'_{i,i+1,i+2,...} erwarteter zeitlich aufeinanderfolgender vollständiger und/oder partieller Prozessabbilder PI der Eingänge und der Ausgänge kann die in Schritt S1 bereitgestellte Folge PI_{i,i+1,i+2,...} oder wenigstens ein Teil dieser und die in Schritt S2 berechnete erwartete Folge PI'_{i,i+1,i+2,...} oder wenigstens ein Teil dieser miteinander verglichen und/oder analysiert werden und basierend auf dem Vergleich und/oder der Analyse wird die Integrität des zu überwachenden cyber-physischen Systems, insbesondere zumindest der (jeweiligen) SPS 2 beurteilt (Schritt S3).

Die Berechnung und Konsistenzprüfung können dabei auf unterschiedliche Art und Weise erfolgen.

Es kann als Eingabe eine Folge von n ermittelten Prozessabbildern (PIᵢ, PIᵢ₊₁, ..., PIᵢ₊ₙ₋₁) dienen. Auf Basis der einzelnen Prozessabbilder PIᵢ bzw. Teilen dieser (eine oder mehrere Variablen dieser) und den oben beschriebenen Quellen lassen sich Annäherungen PI'ᵢ von einzelnen partiellen oder vollständigen Prozessabbilder PI der erfassten/bereitgestellten Folge, oder auch der gesamten Folge PI_{i,i+1,i+2,...} berechnen. Die entsprechenden partiellen oder vollständigen Prozessabbilder PI der bereitgestellten Folge PI_{i,i+1,i+2,...} und die der berechneten Folge PI'_{i,i+1,i+2,...} können dann direkt verglichen und insbesondere Abweichungen zwischen diesen bestimmt werden.

Alternativ oder zusätzlich können die Änderungen zwischen aufeinanderfolgenden partiellen oder vollständigen Prozessabbildern PI/PI' auf Plausibilität geprüft werden.

In beiden Fällen können Schwellwerte für die Abweichungen für die einzelnen Anteile eines Prozessabbildes PI (bestimmte Sensor- und Aktuatorwerte) in einer Policy definiert sein bzw. werden. In der FIG 2 sind Schwellwerte, die bei dem Vergleich berücksichtigt werden, als mit der Bezugsziffer 28 versehenes Element angedeutet.

Weicht die erwartete, berechnete Folge PI'_{i,i+1,i+2,...} von Prozessabbildern zu sehr von der eigentlichen, erfassten Prozessabbildfolge PI_{i,i+1,i+2,...} ab, insbesondere um mehr als einen definierten Schwellwert 28, kann dies als Indiz für eine Manipulation, etwa an der (jeweiligen) Steuerung 2, den Sensoren/Aktuatoren 4, 5, oder auch des technischen Prozesses dienen. Es kann dann eine Reaktion eingeleitet werden, z.B. ein Alarmsignal 27 ausgegeben werden.

Bei einem Alarm 27 kann es sich um einen akustischen (z. B. Sirene) oder visuellen Alarm (z. B. Warnleuchte) insbesondere für Benutzer oder Betreiber vor Ort handeln. Auch ist es möglich, eine Alarm-SMS und/oder Alarm-E-Mail an einen Benutzer bzw. Betreiber zu senden.

Für die Berechnung der erwarteten/approximierten Prozessabbilder PI' können insbesondere Sensor-Fusion Methoden (z.B. Kalman-Filter), oder neuronale Netze verwendet werden.

Die Schritte S1 bis S3 werden wiederholt durchgeführt, wobei die Durchführung zyklisch und/oder ereignisgesteuert und/oder zu vorgegebenen Zeitpunkten erfolgt. Die Schritte S1-S3 werden insbesondere von jedem der Integritätsüberwachungs-Module 20 jeweils durchgeführt, wenn diese eine Prozessabbildfolge PIᵢ von einem zugeordneten Erfassungsmodul 21 erhalten haben.

Weiterhin können die Prozessabbildfolgen PI_{i,i+1,i+2,...} , PI'_{i,i+1,i+2,...} mehrerer Automatisierungskomponenten 2 für eine Analyse/Plausibilisierung kombiniert betrachtet werden. Bei dem dargestellten Ausführungsbeispiel kann dies insbesondere von bzw. mittels dem Integritätsüberwachungs-Modul 15 erfolgen, das in dem Anlagennetz 16 liegt und Daten, konkret Prozessabbildfolgen PI_{i,i+1,i+2,...} von den Erfassungsmodulen 21 aller vier Automatisierungskomponenten 2 erhalten kann.

Durch die erfindungsgemäße Vorgehensweise kann der Vorgang eines Automatisierungsprozesses aktuell und/oder nachträglich verlässlich überprüft werden. Die diskretisierten Schritte und die Reihenfolge von Ereignissen eines Automatisierungsprozesses können so plausibilisiert werden. Die erfindungsgemäße Überprüfung/Überwachung lässt sich dabei mit geringem Aufwand durchführen, insbesondere unter Nutzung von Daten bzw. Werten, die ohnehin in einem zu überwachenden cyber-physischen System 1 vorhanden sind, nämlich unter Nutzung der physikalischen Sensor und/oder Aktuatordaten bzw. -werten. Trotz des geringen Aufwandes kann eine sehr zuverlässige Integritätsüberwachung erzielt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Überwachung der Integrität eines insbesondere industriellen cyber-physischen Systems (1), welches wenigstens eine Automatisierungskomponente (2), von der im Betrieb mit Sensoren (4) ermittelte Messwerte zyklisch erfasst und als Prozessabbild (PI) der Eingänge gespeichert werden und/oder wurden, und von der im Betrieb zyklisch Stellwerte für Aktoren (45) berechnet und als Prozessabbild (PI) der Ausgänge gespeichert werden und/oder wurden, umfasst oder dadurch gebildet wird,
bei dem
a) einem Integritätsüberwachungs-Modul (20) eine Folge (PI_{i,i+1,i+2,...}) zeitlich aufeinanderfolgender vollständiger und/oder partieller Prozessabbilder (PI) der Eingänge und/oder der Ausgänge der wenigstens einen Automatisierungskomponente (2) breitgestellt wird,
b) das Integritätsüberwachungs-Modul (20) eine erwartete Folge (PI'_{i,i+1,i+2,...}) erwarteter zeitlich aufeinanderfolgender vollständiger und/oder partieller Prozessabbilder (PI') der Eingänge und/oder der Ausgänge der wenigstens einen Automatisierungskomponente (2) berechnet, wobei für die Berechnung zumindest ein Teil wenigstens eines der Prozessabbilder (PI) der in Schritt a) bereitgestellten Folge (PI_{i,i+1,i+2,...}) und wenigstens ein Modell (24) eines in dem zu überwachenden cyber-physischen System (1) ablaufenden technischen Prozesses und/oder wenigstens ein Modell (25) der wenigstens einen Automatisierungskomponente (2) verwendet wird,
c) die in Schritt a) bereitgestellte Folge (PI_{i,i+1,i+2,...}) oder wenigstens ein Teil dieser und die in Schritt b) berechnete erwartete Folge (PI'_{i,i+1,i+2,...}) oder wenigstens ein Teil dieser miteinander verglichen und/oder analysiert werden, und
d) basierend auf dem Vergleich und/oder der Analyse die Integrität des zu überwachenden cyber-physischen Systems (1), insbesondere zumindest der wenigstens einen Automatisierungskomponente (2) beurteilt wird.

2. Verfahren nach Anspruch 1, **dadurch gekennzeichnet, dass** die Beurteilung der Integrität des zu überwachenden cyber-physischen Systems (1) die Beurteilung einschließt, ob sich zumindest ein Teil des cyber-physischen Systems (1), insbesondere zumindest die wenigstens eine Automatisierungskomponente (2) in einem manipulierten Zustand befindet, und für den Fall, dass ein manipulierter Zustand erkannt wird, bevorzugt ein Alarm (27) ausgegeben und/oder das cyber-physische System (1), insbesondere zumindest die wenigstens eine Automatisierungskomponente (2) in einen betriebssicheren Zustand überführt wird.

3. Verfahren nach einem der vorhergehenden Ansprüche, **dadurch gekennzeichnet, dass** in Schritt a) eine Folge (PI_{i,i+1,i+2,...}) zeitlich aufeinanderfolgender vollständiger und/oder partieller Prozessabbilder (PI) der Eingänge breitgestellt wird, in Schritt b) eine erwartete Folge (PI_{i,i+1,i+2,...}) erwarteter zeitlich aufeinanderfolgender vollständiger und/oder partieller Prozessabbilder (PI) der Eingänge unter Verwendung wenigstens eines Modells (24) des technischen Prozesses berechnet wird, und/oder
in Schritt a) eine Folge (PI_{i,i+1,i+2,...}) zeitlich aufeinanderfolgender vollständiger und/oder partieller Prozessabbilder (PI) der Ausgänge breitgestellt wird,
in Schritt b) eine erwartete Folge (PI_{i,i+1,i+2,...}) erwarteter zeitlich aufeinanderfolgender vollständiger und/oder partieller Prozessabbilder (PI) der Ausgänge unter Verwendung wenigstens eines Modells (25) der wenigstens einen Automatisierungskomponente (2) berechnet wird.

4. Verfahren nach einem der vorhergehenden Ansprüche, **dadurch gekennzeichnet, dass** in Schritt b) die erwartete Folge (PI'_{i,i+1,i+2,...}) berechnet wird, indem eine oder mehrere Variablen eines der Prozessabbilder (PI) der in Schritt a) bereitgestellten Folge (PI_{i,i+1,i+2,...}) wenigstens einem Modell (24) des technischen Prozesses und/oder wenigstens einem Modell (25) der wenigstens einen Automatisierungskomponente (2) als Eingangswert oder Eingangswerte zugeführt werden und zeitlich beabstandete Ausgangswerte aus diesen berechnet werden, und/oder dass für die Berechnung in Schritt b) wenigstens ein Modell (25) der wenigstens einen Automatisierungskomponente (2) verwendet wird, das zumindest einen Teil der Projektierungsdaten und/oder eines Steuerprogramms der wenigstens einen Automatisierungskomponente (2) umfasst oder dadurch gegeben ist.

5. Verfahren nach einem der vorhergehenden Ansprüche, **dadurch gekennzeichnet, dass** die Folge (PI_{i,i+1,i+2,...}) von vollständigen oder partiellen Prozessabbildern (PI) in Schritt a) in geschütztem Zustand, insbesondere durch eine kryptographische Prüfsumme geschützt bereitgestellt werden.

6. Verfahren nach einem der vorhergehenden Ansprüche, **dadurch gekennzeichnet, dass** dem Integritätsüberwachungs-Modul (20) zusätzlich zu der in Schritt a) bereitgestellten Folge (PI_{i,i+1,i+2,...}) von partiellen oder vollständigen Prozessabbildern (PI) eine weitere Folge (PI_{i-1,i-2,i-3,...}) von zeitlich früher liegenden partiellen oder vollständigen Prozessabbildern (PI) bereitgestellt wird, und die weitere Folge (PI_{i-1,i-2,i-3,...}) bei der Berechnung in Schritt b) zusätzlich berücksichtigt wird.

7. Verfahren nach einem der vorhergehenden Ansprüche, **dadurch gekennzeichnet, dass** das in Schritt b) verwendete wenigstens eine Modell (24) des technischen Prozesses und/oder das in Schritt b) verwendete wenigstens eine Modell (25) der wenigstens einen Automatisierungskomponente wenigstens ein bevorzugt angelerntes neuronales Netz umfasst oder durch ein solches gegeben ist.

8. Verfahren nach einem der vorhergehenden Ansprüche, **dadurch gekennzeichnet, dass** für die Berechnung in Schritt b) wenigstens eine Sensor-Fusion-Methode, insbesondere wenigsten ein Kalman-Filter verwendet wird.

9. Verfahren nach einem der vorhergehenden Ansprüche, **dadurch gekennzeichnet, dass** in Schritt c) die bereitgestellte Folge (PI_{i,i+1,i+2,...}) oder wenigstens ein Teil dieser und die berechnete erwartete Folge (PI'_{i,i+1,i+2,...}) oder wenigstens ein Teil dieser miteinander verglichen werden und der Vergleich einschließt, dass wenigstens eine Abweichung zwischen der in Schritt a) bereitgestellten Folge (PI_{i,i+1,i+2,...}) und der in Schritt b) berechneten Folge (PI'_{i,i+1,i+2,...}) ermittelt und bevorzugt geprüft wird, ob die wenigstens eine Abweichung in einem zulässigen Bereich liegt.

10. Verfahren nach einem der vorhergehenden Ansprüche, **dadurch gekennzeichnet, dass** in Schritt c) die bereitgestellte Folge (PI_{i,i+1,i+2,...}) oder wenigstens ein Teil dieser und die berechnete erwartete Folge (PI_{'i,i+1,i+2,...}) oder wenigstens ein Teil dieser miteinander verglichen werden und der Vergleich einschließt,
dass einzelne der in Schritt a) bereitgestellten vollständigen oder partiellen Prozessabbilder (PI) mit einzelnen der in Schritt b) berechneten vollständigen oder partiellen Prozessabbilder (PI') verglichen werden und die Abweichungen ermittelt werden, und/oder
dass Änderungen zwischen den in Schritt a) bereitgestellten vollständigen oder partiellen Prozessabbildern (PI) ermittelt werden und Änderungen zwischen den in Schritt b) berechneten vollständigen oder partiellen Prozessabbildern (PI') ermittelt werden und bevorzugt diese Änderungen miteinander verglichen werden.

11. Verfahren nach einem der vorhergehenden Ansprüche, **dadurch gekennzeichnet, dass** die Folge (PI_{i,i+1,i+2,...}) vollständiger und/oder partieller Prozessabbilder, die in Schritt a) dem Integritätsüberwachungs-Modul (20) bereitgestellt wird mittels eines Erfassungsmoduls (21) insbesondere aus einem Speicher, bevorzugt Arbeitsspeicher (7) der Automatisierungskomponente (2) ausgelesen und dem Integritätsüberwachungs-Modul (20) bereitgestellt wird, indem das Erfassungsmodul (2) die Folge (PI_{i,i+1,i+2,...}) an das Integritätsüberwachungs-Modul (20) bevorzugt in geschütztem Zustand übermittelt.

12. Verfahren nach einem der vorhergehenden Ansprüche, **dadurch gekennzeichnet, dass** die Schritte a) bis d) wiederholt durchgeführt werden, wobei die Durchführung zyklisch und/oder ereignisgesteuert und/oder zu vorgegebenen Zeitpunkten erfolgt.

13. Integritätsüberwachungs-System (19) umfassend wenigstens ein Integritätsüberwachungs-Modul (20), das dazu ausgebildet und/oder eingerichtet ist
- eine Folge (PI_{i,i+1,i+2,...}) zeitlich aufeinanderfolgender vollständiger und/oder partieller Prozessabbilder (PI) der Eingänge und/oder der Ausgänge wenigstens einer Automatisierungskomponente (2) eines zu überwachenden cyber-physischen Systems (1) zu empfangen,
- eine erwartete Folge (PI'_{i,i+1,i+2,...}) erwarteter zeitlich aufeinanderfolgender vollständiger und/oder partieller Prozessabbilder (PI') der Eingänge und/oder der Ausgänge der wenigstens einen Automatisierungskomponente (2) zu berechnen, wobei für die Berechnung zumindest ein Teil wenigstens eines Prozessabbildes (PI) der bereitgestellten Folge (PI_{i,i+1,i+2,...}) und wenigstens ein Modell (24) eines in dem zu überwachenden cyber-physischen System (1) ablaufenden technischen Prozesses und/oder wenigstens ein Modell (25) der wenigstens einen Automatisierungskomponente (2) verwendet wird,
- die bereitgestellte Folge (PI_{i,i+1,i+2,...}) oder wenigstens einen Teil dieser und die berechnete erwartete Folge (PI'_{i,i+1,i+2,...}) oder wenigstens einen Teil dieser miteinander zu vergleichen und/oder zu analysieren, und
- bevorzugt die Integrität des zu überwachenden cyber-physischen Systems (1) basierend auf dem Vergleich und/oder der Analyse zu beurteilen.

14. Integritätsüberwachungs-System (19) nach Anspruch 13, **dadurch gekennzeichnet, dass** das Integritätsüberwachungs-System (19), insbesondere das wenigstens eine Integritätsüberwachungs-Modul (20) das wenigsten eine Modell (24) des technischen Prozesses und/oder das wenigstens eine Modell (25) der wenigstens einen Automatisierungskomponente (2) umfasst, wobei das wenigstens eine Modell (24) des technischen Prozesses und/oder das wenigstens eine Modell (25) der wenigstens einen Automatisierungskomponente (2) bevorzugt wenigstens ein insbesondere angelerntes neuronales Netz umfasst oder durch ein solches gegeben ist.

15. Integritätsüberwachungs-System (19) nach Anspruch 13 oder 14, **dadurch gekennzeichnet, dass** das Integritätsüberwachungs-System (19 wenigstens ein Erfassungsmodul (21) aufweist, das dazu ausgebildet und/oder eingerichtet ist aus einem Speicher, bevorzugt Arbeitsspeicher (7) der wenigstens einen Automatisierungskomponente (2) vollständige und/oder partielle Prozessabbilder (PI) der Eingänge und/oder Ausgänge auszulesen und dem oder wenigstens einem Integritätsüberwachungs-Modul (20) bevorzugt in geschütztem Zustand zu übermitteln.

16. Integritätsüberwachungs-System (19) nach einem der Ansprüche 13 bis 15, **dadurch gekennzeichnet, dass** das Integritätsüberwachungs-System (19) wenigstens ein Sicherheitsmodul (22) umfasst, welches dazu ausgebildet und/oder eingerichtet ist, für eine bereitgestellte Folge (PI_{i,i+1,i+2,...}) von vollständigen und/oder partiellen Prozessabbildern (PI) eine kryptographische Prüfsumme zu berechnen.

17. Automatisierungskomponente (2), insbesondere Steuerung umfassend ein Integritätsüberwachungs-System (19) nach einem der Ansprüche 13 bis 16.

18. Computerprogramm umfassend Programmcode-Mittel zur Durchführung des Verfahrens nach einem der Ansprüche 1 bis 12.

19. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 12 durchzuführen.
